(19) Europäisches Patentamt
European Patent Office
Office européen des brevets

(11) **EP 4 657 937 A1**

(12) **EUROPEAN PATENT APPLICATION**
published in accordance with Art. 153(4) EPC

(43) Date of publication:
**03.12.2025 Bulletin 2025/49**

(21) Application number: **24752828.4**

(22) Date of filing: **04.02.2024**

(51) International Patent Classification (IPC):
**H04W 68/02** (2009.01)

(52) Cooperative Patent Classification (CPC):
**H04W 52/02; H04W 68/02;** Y02D 30/70

(86) International application number:
**PCT/CN2024/075766**

(87) International publication number:
**WO 2024/164973 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.02.2023 CN 202310153258**

(71) Applicant: **Huawei Technologies Co., Ltd.
Shenzhen, Guangdong 518129 (CN)**

(72) Inventors:
• **FANG, Songlei
Shenzhen, Guangdong 518129 (CN)**
• **LI, Chenwan
Shenzhen, Guangdong 518129 (CN)**
• **WANG, Rui
Shenzhen, Guangdong 518129 (CN)**
• **KUANG, Yiru
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **PAGING METHOD, APPARATUS AND SYSTEM**

(57) This application provides a paging method, an apparatus, and a system, to ensure that terminal devices with different wake-up capabilities can all be successfully paged by a network, and may be applied to 5G, 6G, and a future communication system. The method includes: determining first time information, and sending a first signal to a terminal device. The first time information indicates a start time for monitoring a paging occasion. The first signal indicates the terminal device to switch from a sleep state to a wake-up state, and the first signal includes the first time information.

FIG. 5

**Description**

This application claims priority to Chinese Patent Application No. 202310153258.4, filed with the China National Intellectual Property Administration on February 9, 2023 and entitled "PAGING METHOD, APPARATUS, AND SYSTEM", which is incorporated herein by reference in its entirety.

**TECHNICAL FIELD**

This application relates to the communication field, and in particular, to a paging method, an apparatus, and a system.

**BACKGROUND**

Currently, a network may notify, through paging, a terminal device in a radio resource control (radio resource control, RRC) idle state (RRC_IDLE) or an RRC inactive state (RRC_INACTIVE) to receive a paging message (paging message). The terminal device in the RRC idle state or the RRC inactive state may periodically monitor a specific paging occasion (paging occasion, PO), to determine whether a network device pages the terminal device. Before monitoring the PO, the terminal device performs measurement by using at least one synchronization signal/physical broadcast channel block (synchronization signal/physical broadcast channel block, SSB) (for example, two or three SSB bursts (SSB bursts)), and completes time-frequency synchronization based on a measurement result, to ensure that the terminal device can enter a wake-up state to normally monitor the PO.

However, a terminal device in a low-power wake-up signal (low-power wake-up signal, LP-WUS) mechanism is in a sleep state before being paged, and different terminal devices in the LP-WUS mechanism have different wake-up capabilities, to be specific, time required for the terminal devices to enter a wake-up state after receiving a wake-up signal is different. Currently, there is no solution for paging the terminal device in the LP-WUS mechanism.

**SUMMARY**

Embodiments of this application provide a paging method, an apparatus, and a system, to ensure that terminal devices with different wake-up capabilities can all be successfully paged by a network.

To achieve the foregoing objective, this application uses the following technical solutions.

According to a first aspect, a paging method is provided. The method may be performed by a network device or a component of the network device, for example, a processor, a chip, or a chip system of the network device, or may be implemented by a logical module or software that can implement all or a part of functions of the network device. The following uses an example in which the method is performed by the network device for description. The method includes: determining first time information, and sending a first signal to a terminal device. The first time information indicates a start time for monitoring a paging occasion. The first signal indicates the terminal device to switch from a sleep state to a wake-up state, and the first signal includes the first time information.

Based on the method provided in the first aspect, the network device includes the first time information in the first signal and sends the first signal to the terminal device, wakes up the terminal device by using the first signal, and notifies the terminal device of the start time for monitoring the paging occasion. This can avoid a case in which a terminal device in an LP-WUS mechanism misses paging, and ensure that terminal devices with different wake-up capabilities can all be successfully paged by a network, to improve a paging success rate.

In a possible implementation, the first time information includes a number of a first paging frame, and the start time for monitoring the paging occasion is the first paging frame. Alternatively, the first time information includes a first period of time, the start time for monitoring the paging occasion is t+T1, t is a time at which the first signal is received, and T1 is the first period of time. In this way, after receiving the first signal, the terminal device switches from the sleep state to the wake-up state, and then starts to monitor the paging occasion at the start time indicated by the first time information.

In a possible implementation, the first signal further includes second time information. The second time information indicates a first time, and the first time is a time at which the terminal device switches from the wake-up state to the sleep state. In this way, the terminal device monitors the PO based on the first time information. If determining, before the time indicated by the second time information, that a PO corresponding to the terminal device is not detected, the terminal device may enter the sleep state, to reduce power consumption.

In a possible implementation, the second time information includes a number of a second paging frame, and the first time is the second paging frame.

Alternatively, the second time information includes a quantity M of paging frames, the first time is $t1+M\times T2$, t1 is the start time for monitoring the paging occasion or the time at which the first signal is received, and T2 is duration of one paging frame.

Alternatively, the second time information includes a quantity P of paging cycles, the first time is t1+P×T3, and T3 is duration of one paging cycle.

Alternatively, the second time information includes a quantity Q of paging occasions, the first time is t1+Q×T4, and T4 is duration of one paging occasion.

Alternatively, the second time information includes a second period of time T5, and the first time is t1+T5.

In other words, an end time for monitoring the PO may be determined based on the start time for monitoring the paging occasion or the time at which the first signal is received.

In a possible implementation, the first time information includes the number of the first paging frame, the first signal further includes first indication information, the first indication information indicates whether each of at least one paging group monitors each paging occasion included in each of paging frames starting from the first paging frame, and each of the at least one paging group includes at least one terminal device.

In this way, a paging frame number (the number of the first paging frame) is indicated to the terminal device for monitoring a PO, and whether each paging group performs monitoring is indicated for each PO in each paging frame. The network device pages the terminal device based on a paging group granularity, so that a paging false alarm probability can be reduced, thereby reducing unnecessary power consumption of the terminal device for receiving paging.

In a possible implementation, an identifier of the at least one paging group is configured by a core network element, or an identifier of the at least one paging group is determined based on an identifier corresponding to the at least one terminal device.

In a possible implementation, a paging occasion corresponding to the terminal device is determined based on an identifier of the terminal device, and a terminal device corresponding to a same paging occasion belongs to a same paging group. In this way, at least one terminal device belonging to a same paging group can accept paging in a same PO, to implement paging fairness of the terminal device.

In a possible implementation, a paging occasion corresponding to the terminal device is determined based on an identifier of a first paging group, and the terminal device belongs to the first paging group. In this way, at least one terminal device belonging to a same paging group can accept paging in a same PO, to implement paging fairness of the terminal device.

According to a second aspect, a paging method is provided. The method may be performed by a terminal device or a component of the terminal device, for example, a processor, a chip, or a chip system of the terminal device, or may be implemented by a logical module or software that can implement all or a part of functions of the terminal device. The following uses an example in which the method is performed by the terminal device for description. The method includes: receiving a first signal from a network device, switching from a sleep state to a wake-up state based on the first signal, and monitoring a paging occasion based on first time information. The first signal indicates the terminal device to switch from the sleep state to the wake-up state, the first signal includes the first time information, and the first time information indicates a start time for monitoring the paging occasion

In a possible implementation, the first time information includes a number of a first paging frame, and the start time for monitoring the paging occasion is the first paging frame. Alternatively, the first time information includes a first period of time, the start time for monitoring the paging occasion is t+T1, t is a time at which the first signal is received, and T1 is the first period of time.

In a possible implementation, after monitoring the paging occasion based on the first time information, the method provided in the second aspect further includes: determining that a paging occasion corresponding to the terminal device is not detected; and switching from the wake-up state to the sleep state based on second time information. The second time information indicates a first time, and the first time is a time at which the terminal device switches from the wake-up state to the sleep state.

In a possible implementation, the second time information includes a number of a second paging frame, and the first time is the second paging frame. Alternatively, the second time information includes a quantity M of paging frames, the first time is t1+M×T2, t1 is the start time for monitoring the paging occasion or the time at which the first signal is received, and T2 is duration of one paging frame.

Alternatively, the second time information includes a quantity P of paging cycles, the first time is t1+P×T3, and T3 is duration of one paging cycle.

Alternatively, the second time information includes a quantity Q of paging occasions, the first time is t1+Q×T4, and T4 is duration of one paging occasion.

Alternatively, the second time information includes a second period of time T5, and the first time is t1+T5.

In a possible implementation, the first signal further includes the second time information. Alternatively, the second time information is preconfigured.

Alternatively, before receiving the first signal, the method further includes: receiving a system message. The system message includes the second time information.

In a possible implementation, the first time information includes the number of the first paging frame, the first signal further includes first indication information, the first indication information indicates whether each of at least one paging group monitors each paging occasion included in each of paging frames starting from the first paging frame, and each of the at least one paging group includes at least one terminal device.

In a possible implementation, monitoring the paging occasion based on the first time information includes: monitoring the paging occasion based on the first time information and the first indication information.

In a possible implementation, an identifier of the at least one paging group is configured by a core network element, or an identifier of the at least one paging group is determined based on an identifier corresponding to the at least one terminal device.

In a possible implementation, the paging occasion corresponding to the terminal device is determined based on an identifier of the terminal device, and a terminal device corresponding to a same paging occasion belongs to a same paging group.

In a possible implementation, the paging occasion corresponding to the terminal device is determined based on an identifier of a first paging group, and the terminal device belongs to the first paging group.

In addition, for technical effects of the paging method according to the second aspect, refer to the technical effects of the paging method according to any one of the possible implementations of the first aspect. Details are not described herein again.

According to a third aspect, a communication apparatus is provided. The communication apparatus includes a processing module and a sending module.

The processing module is configured to determine first time information. The sending module is configured to send a first signal to a terminal device. The first time information indicates a start time for monitoring a paging occasion. The first signal indicates the terminal device to switch from a sleep state to a wake-up state, and the first signal includes the first time information.

In a possible implementation, the first time information includes a number of a first paging frame, and the start time for monitoring the paging occasion is the first paging frame. Alternatively, the first time information includes a first period of time, the start time for monitoring the paging occasion is t+T1, t is a time at which the first signal is received, and T1 is the first period of time.

In a possible implementation, the first signal further includes second time information. The second time information indicates a first time, and the first time is a time at which the terminal device switches from the wake-up state to the sleep state.

In a possible implementation, the second time information includes a number of a second paging frame, and the first time is the second paging frame.

Alternatively, the second time information includes a quantity M of paging frames, the first time is t1+M×T2, t1 is the start time for monitoring the paging occasion or the time at which the first signal is received, and T2 is duration of one paging frame.

Alternatively, the second time information includes a quantity P of paging cycles, the first time is t1+P×T3, and T3 is duration of one paging cycle.

Alternatively, the second time information includes a quantity Q of paging occasions, the first time is t1+Q×T4, and T4 is duration of one paging occasion.

Alternatively, the second time information includes a second period of time T5, and the first time is t1+T5.

In a possible implementation, the first time information includes the number of the first paging frame, the first signal further includes first indication information, the first indication information indicates whether each of at least one paging group monitors each paging occasion included in each of paging frames starting from the first paging frame, and each of the at least one paging group includes at least one terminal device.

In a possible implementation, an identifier of the at least one paging group is configured by a core network element, or an identifier of the at least one paging group is determined based on an identifier corresponding to the at least one terminal device.

In a possible implementation, a paging occasion corresponding to the terminal device is determined based on an identifier of the terminal device, and a terminal device corresponding to a same paging occasion belongs to a same paging group.

In a possible implementation, a paging occasion corresponding to the terminal device is determined based on an identifier of a first paging group, and the terminal device belongs to the first paging group.

It should be noted that the communication apparatus according to the third aspect may further include a receiving module. The receiving module and the sending module may be separately disposed, or may be integrated into one module, namely, a transceiver module. Specific implementations of the receiving module and the sending module are not specifically limited in this application.

Optionally, the communication apparatus according to the third aspect may further include a storage module. The storage module stores a program or instructions. When the processing module executes the program or the instructions, the communication apparatus according to the third aspect may be enabled to perform the method according to the first aspect. An obtaining module and the processing module may be a same module, or may be different modules.

It should be noted that the communication apparatus according to the third aspect may be a network device, or may be a chip (system) or another part or component that may be disposed in the network device. This is not limited in this application.

In addition, for technical effects of the communication apparatus according to the third aspect, refer to the technical effects of the method according to any one of the possible implementations of the first aspect. Details are not described herein again.

According to a fourth aspect, a communication apparatus is provided. The communication apparatus includes a processing module and a receiving module.

The receiving module is configured to receive a first signal from a network device. The processing module is configured to switch from a sleep state to a wake-up state based on the first signal. The processing module is further configured to monitor a paging occasion based on first time information. The first signal indicates the communication apparatus to switch from the sleep state to the wake-up state, the first signal includes the first time information, and the first time information indicates a start time for monitoring the paging occasion

In a possible implementation, the first time information includes a number of a first paging frame, and the start time for monitoring the paging occasion is the first paging frame. Alternatively, the first time information includes a first period of time, the start time for monitoring the paging occasion is t+T1, t is a time at which the first signal is received, and T1 is the first period of time.

In a possible implementation, the processing module is further configured to determine that a paging occasion corresponding to the communication apparatus is not detected. The processing module is further configured to switch from the wake-up state to the sleep state based on second time information. The second time information indicates a first time, and the first time is a time at which the communication apparatus switches from the wake-up state to the sleep state.

In a possible implementation, the second time information includes a number of a second paging frame, and the first time is the second paging frame. Alternatively, the second time information includes a quantity M of paging frames, the first time is $t1+M \times T2$, t1 is the start time for monitoring the paging occasion or the time at which the first signal is received, and T2 is duration of one paging frame.

Alternatively, the second time information includes a quantity P of paging cycles, the first time is $t1+P \times T3$, and T3 is duration of one paging cycle.

Alternatively, the second time information includes a quantity Q of paging occasions, the first time is $t1+Q \times T4$, and T4 is duration of one paging occasion.

Alternatively, the second time information includes a second period of time T5, and the first time is $t1+T5$.

In a possible implementation, the first signal further includes the second time information. Alternatively, the second time information is preconfigured.

Alternatively, before receiving the first signal, the method further includes: receiving a system message. The system message includes the second time information.

In a possible implementation, the first time information includes the number of the first paging frame, the first signal further includes first indication information, the first indication information indicates whether each of at least one paging group monitors each paging occasion included in each of paging frames starting from the first paging frame, and each of the at least one paging group includes at least one communication apparatus.

In a possible implementation, monitoring the paging occasion based on the first time information includes: monitoring the paging occasion based on the first time information and the first indication information.

In a possible implementation, an identifier of the at least one paging group is configured by a core network element, or an identifier of the at least one paging group is determined based on an identifier corresponding to the at least one communication apparatus.

In a possible implementation, the paging occasion corresponding to the communication apparatus is determined based on an identifier of the communication apparatus, and a communication apparatus corresponding to a same paging occasion belongs to a same paging group.

In a possible implementation, the paging occasion corresponding to the communication apparatus is determined based on an identifier of a first paging group, and the communication apparatus belongs to the first paging group.

It should be noted that the communication apparatus according to the third aspect may further include a sending module. The receiving module and the sending module may be separately disposed, or may be integrated into one module, namely, a transceiver module. Specific implementations of the receiving module and the sending module are not specifically limited in this application.

Optionally, the communication apparatus according to the fourth aspect may further include a storage module. The storage module stores a program or instructions. When the processing module executes the program or the instructions, the communication apparatus according to the fourth aspect may be enabled to perform the method according to the second aspect.

It should be noted that the communication apparatus according to the fourth aspect may be a terminal device, or may be a chip (system) or another part or component that may be disposed in the terminal device. This is not limited in this application.

In addition, for technical effects of the communication apparatus according to the fourth aspect, refer to the technical effects of the method according to any one of the possible implementations of the second aspect. Details are not described herein again.

According to a fifth aspect, a communication apparatus is provided. The communication apparatus includes a processor. The processor is coupled to a memory, and the memory is configured to store a computer program.

The processor is configured to execute the computer program stored in the memory, so that the method according to any one of the possible implementations of the first aspect and the second aspect is performed.

In a possible design, the communication apparatus according to the fifth aspect may further include a transceiver. The transceiver may be a transceiver circuit or an input/output port. The transceiver may be used by the communication apparatus to communicate with another device.

It should be noted that the input port may be configured to implement the receiving functions in the first aspect and the second aspect, and the output port may be configured to implement the sending functions in the first aspect and the second aspect.

In this application, the communication apparatus according to the fifth aspect may be a terminal device or a network device, or a chip or a chip system disposed inside the terminal device or the network device.

In addition, for technical effects of the communication apparatus according to the fifth aspect, refer to the technical effects of the method according to any one of the possible implementations of the first aspect and the second aspect. Details are not described herein again.

According to a sixth aspect, a communication system is provided. The communication system includes the communication apparatus according to the third aspect and the communication apparatus according to the fourth aspect. Alternatively, the communication system includes the communication apparatus according to the third aspect for implementing the method according to the first aspect and the communication apparatus according to the fourth aspect for implementing the method according to the second aspect.

According to a seventh aspect, a chip system is provided. The chip system includes a logic circuit and an input/output port. The logic circuit is configured to implement the processing functions in the first aspect and the second aspect, and the input/output port is configured to implement the receiving and sending functions in the first aspect and the second aspect. Specifically, the input port may be configured to implement the receiving functions in the first aspect and the second aspect, and the output port may be configured to implement the sending functions in the first aspect and the second aspect.

In a possible design, the chip system further includes a memory, and the memory is configured to store program instructions and data for implementing the functions in the first aspect and the second aspect.

The chip system may include a chip, or may include a chip and another discrete component.

According to an eighth aspect, a computer-readable storage medium is provided. The computer-readable storage medium stores a computer program or instructions. When the computer program or the instructions are run on a computer, the method according to any one of the possible implementations of the first aspect and the second aspect is performed.

According to a ninth aspect, a computer program product is provided, and includes a computer program or instructions. When the computer program or the instructions are run on a computer, the method according to any one of the possible implementations of the first aspect and the second aspect is performed.

**BRIEF DESCRIPTION OF DRAWINGS**

FIG. 1A is a diagram of a structure of a terminal device in an LP-WUS mechanism according to an embodiment of this application;

FIG. 1B is a diagram of a paging cycle according to an embodiment of this application;

FIG. 1C is a diagram of an architecture of a communication system according to an embodiment of this application;

FIG. 2 is a diagram of a structure of a communication apparatus according to an embodiment of this application;

FIG. 3 is a diagram of a structure of a terminal device according to an embodiment of this application;

FIG. 4 is a diagram of a structure of a base station according to an embodiment of this application;

FIG. 5 is a schematic flowchart of a paging method according to an embodiment of this application;

FIG. 6 is a diagram of a scenario according to an embodiment of this application;

FIG. 7A is a schematic flowchart of configuring a paging group according to an embodiment of this application;

FIG. 7B is another schematic flowchart of configuring a paging group according to an embodiment of this application;

FIG. 8A is a diagram of another scenario according to an embodiment of this application;

FIG. 8B is a diagram of still another scenario according to an embodiment of this application;

FIG. 8C is a diagram of still another scenario according to an embodiment of this application;
FIG. 8D is a diagram of still another scenario according to an embodiment of this application; and
FIG. 9 is a diagram of a structure of another communication apparatus according to an embodiment of this application.

## DESCRIPTION OF EMBODIMENTS

The following describes technical solutions of this application with reference to accompanying drawings.

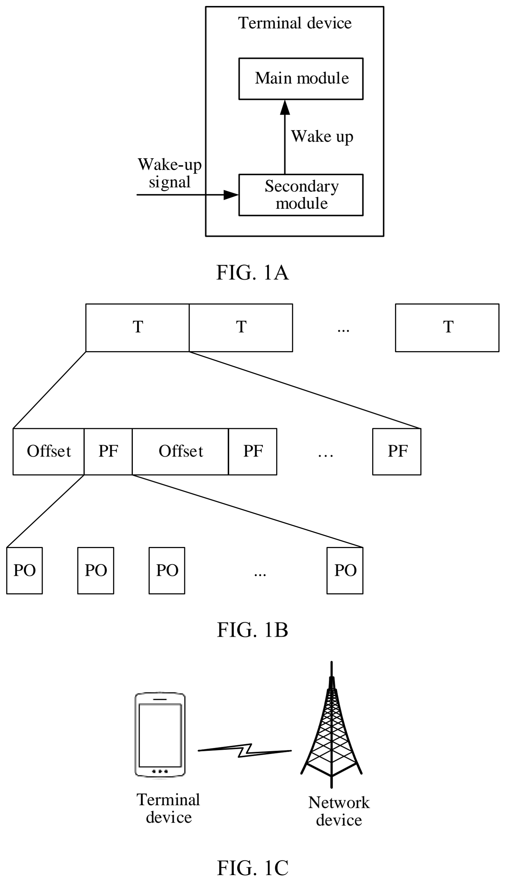

As shown in FIG. 1A, a terminal device in an LP-WUS mechanism uses a combination of main and secondary receiving links, and the terminal device includes a main module (a main link) and a secondary module (a secondary link). The secondary module may be referred to as a low-power wake-up signal receiver (low-power wake-up receiver, LP-WUR), and the main module may be referred to as a main link receiver (main receiver, MR).

Before the main module of the terminal device is woken up, the secondary module is in a state in which a signal can be received, and the main module is in sleep state (which may also be referred to as an ultra-deep sleep (ultra-deep sleep) state). For example, after receiving a wake-up signal, the secondary module of the terminal device triggers, based on the received wake-up signal, the main module to wake up from the sleep state (enter a wake-up state). After a period of wake-up time, the main module switches from the sleep state to the wake-up state, and may receive and send data, and the like. The wake-up time may be time required for the terminal device to enter the wake-up state after receiving the wake-up signal.

For a conventional terminal device, before monitoring a PO, the terminal device performs measurement by using at least one SSB, and completes time-frequency synchronization based on a measurement result, to ensure that the terminal device can enter the wake-up state to normally monitor the PO.

For terminal devices in the LP-WUS mechanism, if the terminal devices are woken up from the sleep state and then perform time-frequency synchronization, because wake-up capabilities of the terminal devices are different, time points at which the terminal devices enter the wake-up state are different. As a result, the time-frequency synchronization also ends at different time points if the terminal devices perform time-frequency synchronization after being woken up. Consequently, the terminal device may miss paging, and cannot be paged by a network device.

Therefore, when a solution of paging the conventional terminal device is applied to the terminal device in the LP-WUS mechanism, the terminal device in the LP-WUS mechanism may miss paging. How to ensure that the terminal device in the LP-WUS mechanism can successfully detect a corresponding paging occasion becomes a problem to be urgently resolved.

This application provides a paging method. A network device includes first time information in a first signal and sends the first signal to a terminal device, wakes up the terminal device by using the first signal, and notifies the terminal device of a start time for monitoring a paging occasion. This can avoid a case in which a terminal device in an LP-WUS mechanism misses paging, and ensure that terminal devices with different wake-up capabilities can all be successfully paged by a network, to improve a paging success rate.

To make embodiments of this application clearer, the following uniformly describes some content and concepts related to embodiments of this application.

Paging (paging): A network may notify, through paging, a terminal device in an RRC idle state or an RRC inactive state to receive a paging message. The terminal device in the RRC idle state or the RRC inactive state may perform monitoring on a paging occasion in each paging cycle, to determine whether the network pages the terminal device. Different terminal devices may correspond to different POs.

In a possible design, a paging process includes: A network device may calculate a PO corresponding to the terminal device, where the PO periodically appears. When needing to page the terminal device, the network device sends, to the terminal device on the PO of the terminal device, a physical downlink control channel (physical downlink control channel, PDCCH) carrying paging downlink control information (downlink control information, DCI). The paging DCI may indicate whether the paging DCI is used to schedule a physical downlink shared channel (physical downlink shared channel, PDSCH) carrying a paging message. Further, if the paging DCI indicates that the PDSCH carrying the paging message is scheduled, the network device sends, at a resource position indicated by the paging DCI, the PDSCH carrying the paging message. Correspondingly, the terminal device may monitor the paging DCI by using a paging-radio network temporary identifier (paging-radio network temporary identifier, P-RNTI) of the terminal device on the PO corresponding to the terminal device. If the paging DCI is detected, and the paging DCI indicates that the PDSCH carrying the paging message is scheduled, the terminal device receives, at the resource position indicated by the paging DCI, the PDSCH carrying the paging message, and determines, based on the paging message carried in the PDSCH, whether the terminal device is paged. If the terminal device is paged, the terminal device initiates a random access procedure, and switches to a connected state.

Paging occasion (paging occasion, PO): a time domain position/time interval at which a terminal device monitors paging DCI.

As shown in FIG. 1B, one paging cycle (which may also be referred to as a discontinuous reception (discontinuous reception, DRX) cycle) of the terminal device may include N paging frames (paging frames, PFs), the paging frame may be referred to as a radio frame, and one PF may be associated with one or more POs. A length of one PO may be one or more slots (slots).

Specifically, an example in which identification information of the terminal device is UE_ID is used. A system frame number (system frame number, SFN) of a PF may be obtained through calculation according to the following Formula (1), and an index i_s of a PO that needs to be monitored by the terminal device may be obtained through calculation according to the following Formula (2).

$$(SFN+PF\_offset) \bmod T=(T \operatorname{div} N)*(UE\_ID \bmod N) \qquad \text{Formula (1)}$$

$$i\_s=floor(UE\_ID/N) \bmod Ns \qquad \text{Formula (2)}$$

In Formula (1) and Formula (2), PF_offset is an offset value corresponding to the PF, and PF_offset may be pre-specified in a protocol, or may be determined by a network device and configured for the terminal device. A mathematical symbol mod indicates modulo, T is a paging cycle, a mathematical symbol div indicates an integer quotient of a result obtained by dividing two integers, and N is a quantity of PFs in the paging cycle T. A mathematical symbol * indicates multiplication calculation, UE_ID indicates an identifier of the terminal device, where a value of UE_ID may be 5th generation short temporary mobile subscriber identity (5th generation short temporary mobile subscriber identity, 5G-S-TMSI) of the terminal device mod 1024; and if the terminal device does not have the 5G-S-TMSI, that a default identifier is UE_ID=0 is used. floor() indicates rounding down, and Ns is a quantity of POs in one PF.

Optionally, one PO includes S SSB beams, S is determined by an SSB position burst (ssb-PositionsInBurst) field in a system information block 1 (system information block 1, SIB1), and paging messages sent on all the SSB beams are the same. One PO supports paging a maximum of 32 terminal devices.

It should be understood that in embodiments of this application, the paging cycle T, the quantity N of PFs in the paging cycle, and the quantity Ns of POs in the PF may be dynamically configured as required or pre-specified in a protocol. This is not limited.

The technical solutions in embodiments of this application may be applied to various communication systems, for example, an orthogonal frequency-division multiple access (orthogonal frequency-division multiple access, OFDMA) system, a single carrier frequency-division multiple access (single carrier FDMA, SC-FDMA) system, and another system. Terms "system" and "network" can be replaced with each other. The OFDMA system may implement wireless technologies such as evolved universal terrestrial radio access (evolved universal terrestrial radio access, E-UTRA) and ultra mobile broadband (ultra mobile broadband, UMB). The E-UTRA is an evolved release of a universal mobile telecommunications system (universal mobile telecommunications system, UMTS). A new version that uses the E-UTRA is used in LTE and various versions evolved based on the LTE in the 3GPP. A 5G communication system is a next generation communication system under research. The 5G communication system includes a non-standalone (non-standalone, NSA for short) 5G mobile communication system, a standalone (standalone, SA for short) 5G mobile communication system, or both an NSA 5G mobile communication system and an SA 5G mobile communication system. In addition, the communication systems may be further applicable to a future-oriented communication technology, and are all applicable to the technical solutions provided in embodiments of this application. The communication systems applicable to this application are merely examples for description, and communication systems to which this application is applicable are not limited thereto. This is uniformly described herein, and details are not described below again.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to accompanying drawings. In addition, a combination of these solutions may be used.

In addition, in embodiments of this application, terms such as "example" and "for example" indicate giving an example, an illustration, or a description. Any embodiment or design solution described as an "example" in this application should not be explained as being more preferred or having more advantages than another embodiment or design solution. Exactly, use of the term "example" is intended to present a concept in a specific manner.

In embodiments of this application, "of (of)", "relevant (corresponding, relevant)", and "corresponding (corresponding)" may be interchangeably used sometimes. It should be noted that when differences of the terms are not emphasized, meanings expressed by the terms are consistent.

In embodiments of this application, unless otherwise specified, "/" indicates that associated objects are in an "or" relationship. For example, A/B may indicate A or B. "And/or" in embodiments of this application merely describes an association relationship between the associated objects, and indicates that three relationships may exist. For example, A and/or B may indicate the following cases: Only A exists, both A and B exist, and only B exists, where A and B may be singular or plural.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to a similar technical problem.

For ease of understanding of embodiments of this application, a communication system shown in FIG. 1C is first used as an example to describe in detail a communication system applicable to embodiments of this application. For example, FIG. 1C is a diagram of an architecture of the communication system to which a paging method is applicable according to an embodiment of this application.

As shown in FIG. 1C, the communication system includes a network device and a terminal device.

The network device may also be referred to as an access device, an access network device, or a radio access network device. The network device can manage a radio resource, provide an access service for the terminal device, and complete data forwarding between the terminal device and a core network. The network device may also be understood as a base station in a network.

For example, the network device in this embodiment of this application may be any communication device that has a wireless transceiver function and that is configured to communicate with the terminal device. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a TRP, or the like. Alternatively, the network device may be a gNB or a transmission point (TP or TRP) in a 5G system like an NR system, may be one antenna panel or a group of antenna panels (including a plurality of antenna panels) of a base station in a 5G system, may be a network node, for example, a baseband unit (BBU) or a distributed unit (distributed unit, DU), that constitutes a gNB or a transmission point, or may be a satellite or an uncrewed aerial vehicle.

In some deployments, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, to implement functions of an RRC layer and a packet data convergence protocol (packet data convergence protocol, PDCP) layer. The DU is responsible for processing a physical layer protocol and a real-time service, to implement functions of a radio link control (radio link control, RLC) layer, a MAC layer, and a physical (physical, PHY) layer. The AAU implements a part of physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The terminal device is a terminal that accesses the communication system and that has a wireless transceiver function, or a chip or a chip system that may be disposed in the terminal. The terminal device in this application may also be referred to as a terminal, user equipment (user equipment, UE), an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), an uncrewed aerial vehicle, a computer with a wireless transceiver function, customer premise equipment (customer premise equipment, CPE), a virtual reality (virtual reality, VR) terminal, an augmented reality (augmented reality, AR) terminal, an internet of things (internet of things, IoT) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, another processing device, vehicle-mounted device, or wearable device connected to a wireless modem, a terminal in a 5G network, a terminal in a future evolved network, or the like.

For another example, the terminal device in this application may be an express delivery terminal (for example, a device that can monitor a position of a cargo vehicle, and a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, and a smart meter) in intelligent architecture, a wireless terminal (for example, a wearable device that can monitor a physiological

9

status of a person or an animal) in intelligent healthcare, a wireless terminal (for example, an intelligent bus, an intelligent vehicle, a shared bicycle, a charging pile monitoring device, intelligent traffic lights, and an intelligent monitoring and intelligent parking device) in intelligent transportation, or a wireless terminal (for example, a vending machine, a self-service checkout machine, and an unmanned convenience store) in intelligent retail. For another example, the terminal device in this application may be a vehicle-mounted module, a vehicle-mounted assembly, a vehicle-mounted part, a vehicle-mounted chip, or a vehicle-mounted unit that is built in a vehicle as one or more parts or units. The vehicle may implement the method provided in this application by using the vehicle-mounted module, the vehicle-mounted assembly, the vehicle-mounted part, the vehicle-mounted chip, or the vehicle-mounted unit that is built in the vehicle.

For example, the terminal device may be a terminal device in an LP-WUS mechanism, and may be used in a cellular network scenario and a short-distance scenario, for example, a scenario of communication between terminal devices. The communication between the terminal devices is performed through a PC5 interface.

Optionally, the network device or the terminal device in this embodiment of this application may also be referred to as a communication apparatus, and may be a general-purpose device or a dedicated device. This is not specifically limited in embodiments of this application.

Optionally, a related function of the terminal device or the network device in this embodiment of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualization function instantiated on a platform (for example, a cloud platform).

Optionally, the communication system may further include a core network element. The core network element is a general term of a plurality of functional entities used for user management, data transmission, and base station configuration on a network side. The core network element may include but is not limited to one or more of the following: a session management network element, a user plane network element, and a mobility management network element.

Session management network element: The session management network element is responsible for protocol data unit (protocol data unit, PDU) session management, and sends a quality of service (quality of service, QoS) flow (flow) configuration, a QoS requirement, and the like of a PDU session to a network device through a mobility management network element.

User plane network element: The user plane network element serves as an interface to a data network, and completes functions such as user plane data forwarding, session/flow level-based charging statistics collection, and bandwidth throttling, that is, packet routing and forwarding, QoS handling for user plane data, and the like. In a 5G communication system, the user plane network element may be a user plane function (user plane function, UPF) network element.

Mobility management network element: The mobility management network element is mainly configured to perform mobility management, access management, and the like. In a 5G mobile communication system, the mobility management network element may be an access and mobility management function (access and mobility management function, AMF) network element, and mainly performs functions such as mobility management and access authentication/authorization. In addition, the mobility management network element may be further responsible for transferring a user policy between a terminal and a policy control function (policy control function, PCF) network element.

Optionally, the communication system shown in FIG. 1C may be applicable to a communication network currently being discussed, may be applicable to another future network, or the like. This is not specifically limited in embodiments of this application.

It should be noted that the paging method provided in embodiments of this application may be applicable to any two nodes shown in FIG. 1C. For specific implementation, refer to the following method embodiments. Details are not described herein.

It should be noted that the solutions in this embodiment of this application may also be applied to another communication system, and a corresponding name may also be replaced with a name of a corresponding function in the another communication system.

It should be understood that FIG. 1C is merely a simplified diagram of an example for ease of understanding. The communication system may further include another network device and/or another terminal device that are/is not shown in FIG. 1C.

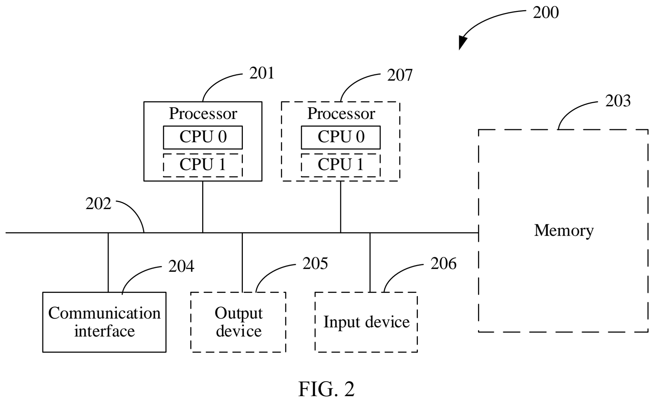

For example, the related function of the terminal device or the network device in this embodiment of this application may be implemented by a communication apparatus 200 in FIG. 2.

FIG. 2 is a diagram of a structure of the communication apparatus 200 according to an embodiment of this application. The communication apparatus 200 includes one or more processors 201, a communication line 202, and at least one communication interface (FIG. 2 is described merely by using an example in which a communication interface 204 and one processor 201 are included for description). Optionally, the communication apparatus 200 may further include a memory 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a channel for connecting different components.

The communication interface 204 may be a transceiver module, configured to communicate with another device or a communication network, for example, an Ethernet, a RAN, or a wireless local area network (wireless local area network, WLAN). For example, the transceiver module may be an apparatus like a transceiver or a transceiver machine. Optionally, the communication interface 204 may alternatively be a transceiver circuit located in the processor 201, to implement signal input and signal output of the processor.

The memory 203 may be an apparatus having a storage function. For example, the memory 203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 203 is not limited thereto. The memory may exist independently, and is connected to the processor through the communication line 202. The memory may alternatively be integrated with the processor.

The memory 203 is configured to store computer-executable instructions for executing the solutions in this application, and the processor 201 controls the execution. The processor 201 is configured to execute the computer-executable instructions stored in the memory 203, to implement the paging method provided in embodiments of this application.

Alternatively, in this embodiment of this application, the processor 201 may implement a processing-related function in the paging method provided in the following embodiments of this application, and the communication interface 204 may be responsible for communicating with the another device or the communication network. This is not specifically limited in this embodiment of this application.

Optionally, the memory 203 in this embodiment of this application may be further configured to store information or parameters described in the following embodiments.

The computer-executable instructions in this embodiment of this application may also be referred to as application program code. This is not specifically limited in this embodiment of this application.

During specific implementation, in an embodiment, the processor 201 may include one or more CPUs, for example, a CPU 0 and a CPU 1 in FIG. 2.

During specific implementation, in an embodiment, the communication apparatus 200 may include a plurality of processors, for example, the processor 201 and a processor 207 in FIG. 2. Each of these processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 200 may further include an output device 205 and an input device 206. The output device 205 communicates with the processor 201, and may display information in a plurality of manners.

The communication apparatus 200 may be a general-purpose apparatus or a dedicated apparatus. For example, the communication apparatus 200 may be a desktop computer, a portable computer, a network server, a palmtop computer (personal digital assistant, PDA), a mobile phone, a tablet computer, a wireless terminal device, an embedded device, or a device having a structure similar to that in FIG. 2. A type of the communication apparatus 200 is not limited in this embodiment of this application.

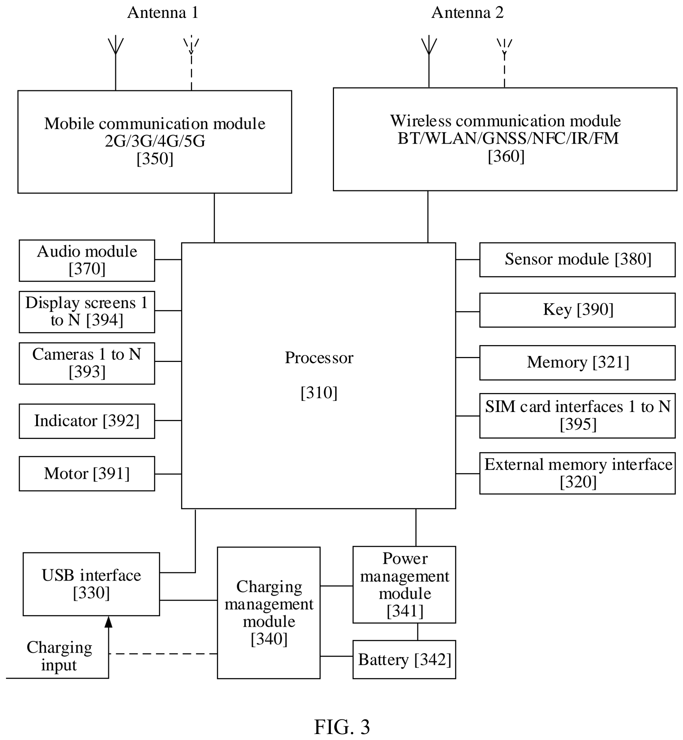

With reference to the diagram of the structure of the communication apparatus 200 shown in FIG. 2, an example in which the communication apparatus 200 is the terminal device in FIG. 1C is used. For example, FIG. 3 is a diagram of a hardware structure of a terminal device according to an embodiment of this application.

In some embodiments, a function of the processor 201 in FIG. 2 may be implemented by a processor 310 in FIG. 3.

In some embodiments, a function of the communication interface 204 in FIG. 2 may be implemented by an antenna 1, an antenna 2, a mobile communication module 350, a wireless communication module 360, and the like in FIG. 3.

The antenna 1 and the antenna 2 are configured to transmit and receive electromagnetic wave signals. Each antenna in the terminal device may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a wireless communication solution that includes 2G, 3G, 4G, 5G, or the like and that is applied to the terminal device. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transfer the electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules in the mobile communication module 350 may be disposed in the processor 310. In some embodiments, at least some functional modules in the mobile communication module 350 may be disposed in a same component as at least some modules in the processor 310.

The wireless communication module 360 may be one or more components integrating at least one communication processing module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, the antenna 1 of the terminal device is coupled to the mobile communication module 350, and the antenna 2 is coupled to the wireless communication module 360, so that the terminal device can communicate with a network and another device by using a wireless communication technology.

In some embodiments, a function of the memory 203 in FIG. 2 may be implemented by a memory 321 in FIG. 3, an external memory (for example, a Micro SD card) connected to an external memory interface 320, or the like.

In some embodiments, a function of the output device 205 in FIG. 2 may be implemented by a display screen 394 in FIG. 3. The display screen 394 includes a display panel.

In some embodiments, a function of the input device 206 in FIG. 2 may be implemented by a mouse, a keyboard, a touchscreen device, or a sensor module 380 in FIG. 3. In some embodiments, as shown in FIG. 3, the terminal device may further include one or more of an audio module 370, a camera 393, an indicator 392, a motor 391, a key 390, a SIM card interface 395, a USB interface 330, a charging management module 340, a power management module 341, and a battery 342. This is not specifically limited in this embodiment of this application.

It may be understood that the structure shown in FIG. 3 does not constitute a specific limitation on the terminal device. For example, in some other embodiments of this application, the terminal device may include more or fewer components than those shown in the figure, some components may be combined, some components may be split, or components may be differently arranged. The components shown in the figure may be implemented by hardware, software, or a combination of software and hardware.

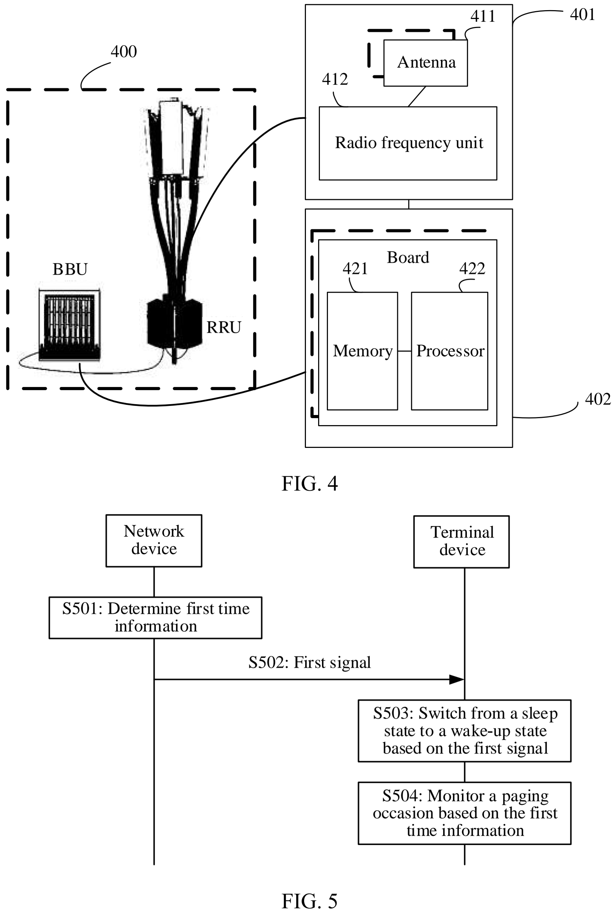

With reference to the diagram of the structure of the communication apparatus 200 shown in FIG. 2, an example in which the communication apparatus 200 is the network device in FIG. 3, and the network device is a base station is used. For example, FIG. 4 is a specific structural form of a base station 400 according to an embodiment of this application.

The base station 400 includes one or more radio frequency units (for example, an RRU 401) and one or more BBUs 402.

The RRU 401 may be referred to as a transceiver unit, a transceiver machine, a transceiver circuit, a transceiver, or the like, and may include at least one antenna feeder system (that is, antenna) 411 and a radio frequency unit 412. The RRU 401 is mainly configured to: receive and send radio frequency signals; and perform conversion between a radio frequency signal and a baseband signal. In some embodiments, a function of the communication interface 204 in FIG. 2 may be implemented by the RRU 401 in FIG. 4.

The BBU 402 is a control center of the network device, may also be referred to as a processing unit, and is mainly configured to complete baseband processing functions such as channel coding, multiplexing, modulation, and spectrum spreading.

In some embodiments, the BBU 402 may include one or more boards. A plurality of boards may jointly support a radio access network (for example, an LTE network) of a single access standard, or may separately support radio access networks (for example, an LTE network, a 5G network, or another network) of different access standards. The BBU 402 further includes a memory 421 and a processor 422. The memory 421 is configured to store necessary instructions and data. The processor 422 is configured to control the network device to perform a necessary action. The memory 421 and the processor 422 may serve one or more boards. In other words, a memory and a processor may be disposed individually on each board. Alternatively, a plurality of boards may share a same memory and a same processor. In addition, a necessary circuit may further be disposed on each board. In some embodiments, a function of the processor 201 in FIG. 2 may be implemented by the processor 422 in FIG. 4, and a function of the memory 203 in FIG. 2 may be implemented by the memory 421 in FIG. 4.

Optionally, the RRU 401 and the BBU 402 in FIG. 4 may be physically disposed together, or may be physically disposed separately, for example, a distributed base station. This is not specifically limited in this embodiment of this application.

The following specifically describes a paging method provided in embodiments of this application with reference to FIG. 5 to FIG. 8D. Actions, terms, and the like in embodiments of this application may be mutually referenced. This is not limited. An object name, a parameter name, or the like in embodiments of this application is merely an example. During specific implementation, another name may be used. This is not limited.

For example, FIG. 5 is a schematic flowchart of a paging method according to an embodiment of this application.

As shown in FIG. 5, the paging method includes the following steps.

S501: A network device determines first time information.

For example, the first time information indicates a start time for monitoring a paging occasion. A terminal device may start to monitor the paging occasion based on the start time indicated by the first time information.

In some embodiments, the first time information includes a number of a first paging frame, and the start time for monitoring the paging occasion is the first paging frame. In other words, the start time for monitoring the paging occasion is indicated by a paging frame number.

In some other embodiments, the first time information includes a first period of time, the start time for monitoring the paging occasion is t+T1, t is a time at which the terminal device receives a first signal, and T1 is the first period of time.

For example, the first period of time may be duration.

For another example, the first period of time may be indicated by a quantity of SSB bursts, for example, the first time information includes a quantity S1 of SSB bursts, and the first period of time is T1=S1*duration of one SSB burst, where a mathematical symbol * indicates multiplication calculation.

Optionally, the time at which the first signal is received may be a time at which the first time information is received, and the first time information is carried in the first signal.

For example, assuming that the terminal device receives the first signal at the time t, the terminal device starts to monitor the PO at the time t+T1.

S502: The network device sends the first signal to the terminal device. Correspondingly, the terminal device receives the first signal from the network device.

For example, the first signal indicates the terminal device to switch from a sleep state to a wake-up state. In other words, the first signal is used to wake up the terminal device.

In this application, the sleep state may also be referred to as an ultra-deep sleep state.

In this application, the first signal may be referred to as a wake-up signal, a low-power wake-up signal LP-WUS, or the like. This is not limited in this application.

For example, the first signal includes the first time information. The network device includes the first time information in the wake-up signal and sends the wake-up signal to the terminal device.

For example, with reference to FIG. 1A, the secondary module of the terminal device receives the first signal from the network device.

In a possible design manner, the first time information includes the number of the first paging frame, and the first signal may further include first indication information. Optionally, the first signal may further include an identifier of a first paging group corresponding to the terminal device.

In another possible design manner, the first time information includes the first period of time, and the first signal may further include the number of the first paging frame and first indication information. Optionally, the first signal may further include an identifier of a first paging group corresponding to the terminal device.

For example, group paging may be performed on a terminal device served by the network device. For example, the terminal device served by the network device may be grouped into at least one paging group, each of the at least one paging group includes at least one terminal device, and the at least one paging group includes the first paging group.

For example, the identifier of the first paging group corresponding to the terminal device indicates that the terminal device belongs to the first paging group.

In this application, a paging group may also be referred to as a WUS group or the like.

Optionally, the first indication information indicates whether each paging group in the at least one paging group monitors each paging occasion included in each paging frame in a paging frame starting from the first paging frame.

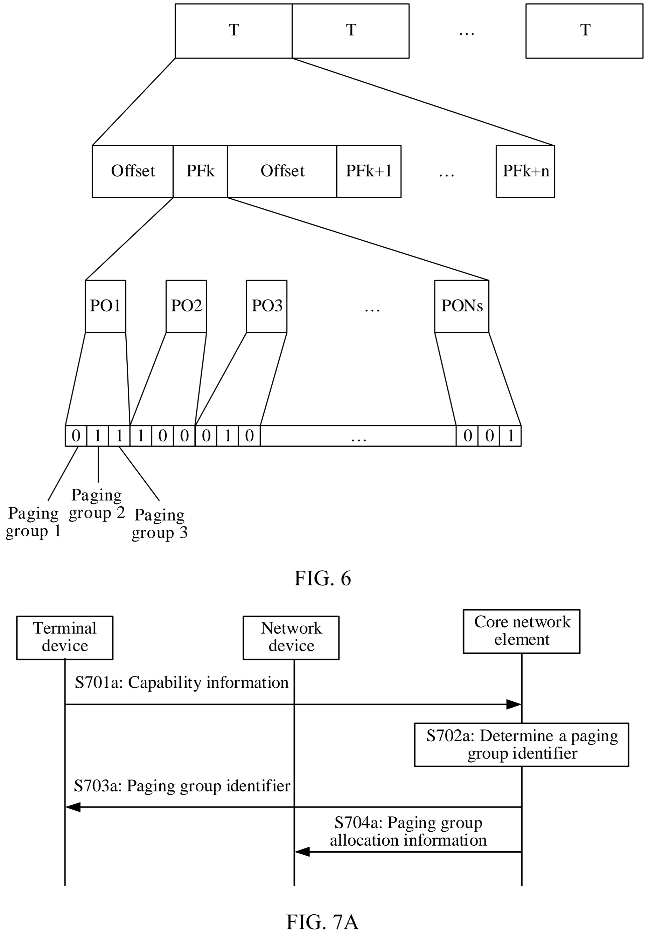

For example, with reference to FIG. 6, terminal devices served by the network device are grouped into three paging groups, and corresponding paging group identifiers are respectively a paging group 1, a paging group 2, and a paging group 3. It is assumed that the paging group 1 includes a terminal device 1 and a terminal device 2, the paging group 2 includes a terminal device 3 and a terminal device 4, the paging group 3 includes a terminal device 5 and a terminal device 6, and the number of the first paging frame is PFk, the first indication information indicates whether the paging group 1 to the paging group 3 monitor each PO in paging frames starting from PFk. FIG. 6 shows only whether the paging group 1 to the paging group 3 monitor each PO in PFk. With reference to FIG. 6, the first indication information is 011100010...001. In a PO1 in PFk, if a value of a bit corresponding to the paging group 1 is 0, it indicates that the terminal device 1 and the terminal device 2 in the paging group 1 do not monitor the PO1 in PFk; if a value of a bit corresponding to the paging group 2 is 1, it indicates that the terminal device 3 and the terminal device 4 in the paging group 2 monitor the PO1 in PFk; and if a value of a bit corresponding to the paging group 3 is 1, it indicates that the terminal device 5 and the terminal device 6 in the paging group 3 monitor the PO1 in PFk. Details are not described one by one.

In this way, the paging frame number (the number of the first paging frame) is indicated to the terminal device for monitoring a PO, and whether each paging group performs monitoring is indicated for each PO in each paging frame. The network device pages the terminal device based on a paging group granularity, so that a paging false alarm probability can be reduced, thereby reducing unnecessary power consumption of the terminal device for receiving paging. For example, with reference to FIG. 6, if the network device expects to page the terminal device 4 to the terminal device 6, the network device may indicate, by using the first indication information, the paging group 2 and the paging group 3 to monitor the PO at corresponding positions, and the paging group 1 does not monitor the PO, so that a paging false alarm probability can be reduced.

Optionally, an identifier of the at least one paging group is configured by a core network element, or an identifier of the at least one paging group is determined based on an identifier corresponding to the at least one terminal device.

FIG. 7A shows a procedure of configuring a paging group by the core network element.

For example, as shown in FIG. 7A, in S701a, the terminal device sends capability information. Correspondingly, the core network element receives the capability information.

Optionally, the capability information may be sent by the terminal device by using non-access stratum (non-access stratum, NAS) signaling, and the capability information indicates that the terminal device supports grouping configured (controlled) by the core network element.

S702a: The core network element determines a paging group identifier.

For example, the core network element allocates a paging group to the terminal device, and allocates the paging group identifier.

S703a: The core network element sends the paging group identifier. Correspondingly, the terminal device receives the paging group identifier.

Optionally, the paging group identifier may be sent by using the NAS signaling.

S704a: The core network element sends paging group allocation information to the network device. Correspondingly, the network device receives the paging group allocation information from the core network element.

Optionally, the paging group allocation information includes a paging group identifier corresponding to a terminal device that is in an idle state or an inactive state and that is served by the network device. In this way, the terminal device in the idle state or the inactive state is grouped into at least one paging group, and the network device is notified, by using the paging group allocation information, of a paging group to which the terminal device is allocated.

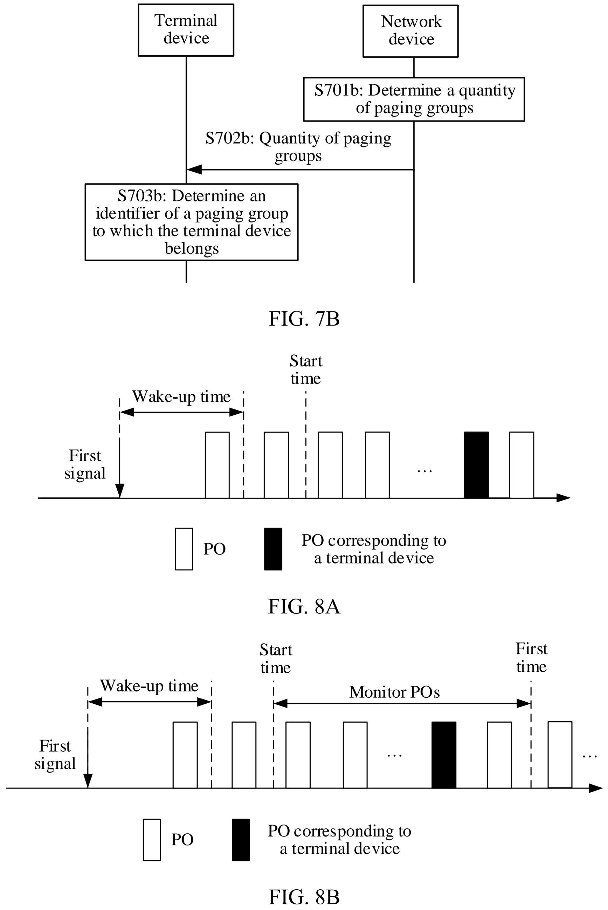

FIG. 7B shows a procedure of configuring a paging group based on an identifier of the terminal device.

As shown in FIG. 7B, in S701b, the network device determines a quantity of paging groups.

Optionally, the network device determines the quantity of paging groups that are in a cell served by the network device and that are grouped based on the identifier of the terminal device.

For example, it is assumed that one PO supports paging 32 terminal devices, and the 32 terminal devices are grouped into eight paging groups. It is likely that four paging groups are determined based on the identifier of the terminal device (the quantity of paging groups determined by the network device in S701b), and the other four paging groups are determined by the core network element.

S702b: The network device sends the quantity of paging groups. Correspondingly, the terminal device receives the quantity of paging groups from the network device.

S703b: The terminal device determines an identifier of a paging group to which the terminal device belongs.

For example, if the terminal device is not configured with the paging group identifier allocated by the core network element, or the terminal device is configured with the paging group identifier allocated by the core network element, but the terminal device is located in a cell that supports determining the paging group identifier only based on the identifier of the terminal device, the terminal device determines the paging group identifier of the terminal device according to the following formula: WUSgroupID=(floor(UE_ID/(N*Ns)) mod WUSgroupsNumForUEID)+(WUSgroupsNumPerPO-WUSgroupsNumForUEID).

WUSgroupID indicates the paging group identifier, and floor() indicates rounding down. UE_ID indicates the identifier of the terminal device, where a value of UE_ID may be 5th generation short temporary mobile subscriber identity (5th generation short temporary mobile subscriber identity, 5G-S-TMSI) of the terminal device mod 1024; and if the terminal device does not have the 5G-S-TMSI, that a default identifier is UE_ID=0 is used. N is a quantity of PFs in a paging cycle T, a mathematical symbol * indicates multiplication calculation, Ns is a quantity of POs in one PF, a mathematical symbol mod indicates modulo, WUSgroupsNumForUEID indicates a quantity of paging group identifiers that are determined based on the identifier of the terminal device and that are in a paging group corresponding to one PO, where for example, WUSgroupsNumForUEID may be a quantity of paging groups received by the terminal device in S702b, and WUSgroupsNumPerPO indicates a total quantity of paging groups into which terminal devices corresponding to one PO are grouped, in other words, the terminal devices corresponding to the PO are grouped into WUSgroupsNumPerPO paging groups.

In some embodiments, a paging occasion corresponding to the terminal device is determined based on the identifier of the terminal device.

Optionally, a terminal device corresponding to a same paging occasion belongs to a same paging group.

For example, the PO is first determined based on the identifier of the terminal device, and then the terminal device corresponding to the same PO is grouped into the same paging group. An identifier of the paging group may be configured by the core network element, or may be determined based on an identifier corresponding to at least one terminal device (for example, a terminal device that is in an idle state or an inactive state and that is served by the network device).

For example, during grouping, the terminal device corresponding to the same PO is grouped into one paging group, and the PO corresponding to the terminal device may be determined according to Formula (1) and Formula (2).

Optionally, one paging group may include at least one paging subgroup. For example, terminal devices corresponding to a same PO may be grouped into a plurality of paging subgroups, and the plurality of paging subgroups correspond to a same paging group identifier.

For example, if there are a large quantity of terminal devices corresponding to the same PO, the terminal devices corresponding to the same PO are grouped into a paging subgroup 1 and a paging subgroup 2, and both the paging subgroup 1 and the paging subgroup 2 correspond to an identifier of the paging group 1.

In some other embodiments, a paging occasion corresponding to the terminal device is determined based on an identifier of a first paging group.

For example, at least one terminal device (a terminal device that is in an idle state or an inactive state and that is served by the network device) is grouped into one or more paging groups, to obtain a paging group identifier. The paging group identifier may be configured by the core network element, or may be determined based on an identifier corresponding to the at least one terminal device, and then a PO corresponding to the terminal device is determined based on the paging group identifier.

For example, a system frame number SFN of a PF may be obtained through calculation by using the following Formula (3), and an index $i\_s$ of the PO corresponding to the terminal device may be obtained through calculation by using the following Formula (4).

$$(SFN+PFk\_offset) \bmod T=(T \operatorname{div} N)*(WUS \ group\_ID \bmod N) \qquad \text{Formula (3)}$$

$$i\_s=floor(WUS \ group\_ID/N) \bmod Ns \qquad \text{Formula (4)}$$

In Formula (3) and Formula (4), PFk_offset is an offset value corresponding to PFk (the number of the first paging frame), and PFk_offset may be pre-specified in a protocol, or may be determined by the network device and configured for the terminal device. A mathematical symbol mod indicates modulo, T is a paging cycle, a mathematical symbol div indicates an integer quotient of a result obtained by dividing two integers, and N is a quantity of PFs in the paging cycle T. A mathematical symbol * indicates multiplication calculation, and WUS group_ID indicates the identifier of the first paging group. floor() indicates rounding down, and Ns is a quantity of POs in one PF (for example, the first paging frame).

A manner of determining, based on the identifier of the first paging group, the paging occasion corresponding to the terminal device is not limited in this application. This is not limited to Formula (3) and Formula (4). Based on the foregoing two manners, the PO is first calculated based on the identifier of the terminal device, and then the terminal device corresponding to the same PO is grouped into the same paging group; or the at least one terminal device (the terminal device that is in the idle state or the inactive state and that is served by the network device) is grouped into the one or more paging groups, to obtain the paging group identifier, and the PO corresponding to the terminal device is determined based on the paging group identifier. The terminal device in the same paging group corresponds to the same PO. In this way, the at least one terminal device that belongs to the same paging group can accept paging in the same PO, to implement paging fairness of the terminal device.

S503: The terminal device switches from the sleep state to the wake-up state based on the first signal.

For example, after receiving the first signal, the terminal device is woken up, and switches from the sleep state to the wake-up state.

With reference to FIG. 1B, after receiving the first signal, the secondary module of the terminal device sends the first signal to the main module of the terminal device, to trigger the main module of the terminal device to switch from the sleep state to the wake-up state.

S504: The terminal device monitors the paging occasion based on the first time information.

With reference to FIG. 1B, the main module of the terminal device monitors the paging occasion based on the first time information.

For example, the first time information includes the number of the first paging frame, and the terminal device starts to monitor the PO in the first paging frame.

Alternatively, for example, if the first time information includes the first period of time T1, and the terminal device receives the first signal at the time t, the terminal device starts to monitor the PO at the time t+T1.

As shown in FIG. 8A, after receiving the first signal, the terminal device switches from the sleep state to the wake-up state, and then starts to monitor the paging occasion at the start time indicated by the first time information.

In this way, even if wake-up capabilities of terminal devices are different, all the terminal devices start to monitor the PO at the start time indicated by the first time information, so that the terminal devices with different wake-up capabilities can be flexibly covered. This can avoid a case in which a terminal device that is woken up later misses paging, and can ensure that the terminal devices with different wake-up capabilities can all be successfully paged by a network, to improve a paging success rate. In addition, the terminal device does not need to perform time-frequency synchronization, so that power consumption of the terminal device can be reduced.

In some embodiments, that the terminal device monitors the paging occasion based on the first time information may include: The terminal device monitors the paging occasion based on the first time information and the first indication information.

For example, the terminal device monitors the PO based on the first time information, the first indication information, and the identifier of the first paging group corresponding to the terminal device.

With reference to FIG. 6, the first indication information indicates that the paging group 1 does not perform PO monitoring on the PO1 in PFk, the paging group 1 performs PO monitoring on a PO2 in PFk, the paging group 1 performs PO monitoring on a PO3 in PFk, and the like. Assuming that the terminal device 1 belongs to the paging group 1, the terminal device 1 performs PO monitoring on the PO2 and the PO3 in PFk.

Optionally, if the terminal device does not detect, based on the first time information, the PO corresponding to the terminal device, the terminal device enters the sleep state.

In some embodiments, after the terminal device monitors the paging occasion based on the first time information, the method provided in this embodiment of this application may further include the following step 1 and step 2.

Step 1: The terminal device determines that the paging occasion corresponding to the terminal device is not detected.

Step 2: The terminal device switches from the wake-up state to the sleep state based on second time information.

Optionally, the second time information indicates a first time, and the first time is a time at which the terminal device switches from the wake-up state to the sleep state. In other words, the second time information indicates a time at which the terminal device enters the sleep state (an end time for monitoring the PO).

With reference to FIG. 8B, the terminal device starts to monitor the PO at the start time indicated by the first time information, and if the terminal device detects the PO corresponding to the terminal device before the first time and is paged, the terminal device switches to a connected state.

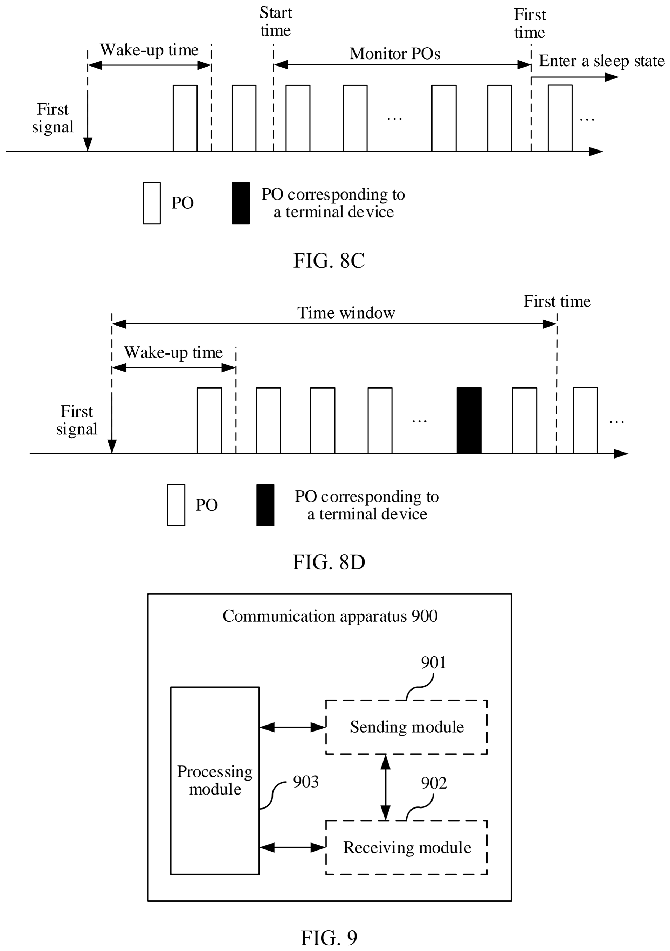

With reference to FIG. 8C, the terminal device starts to monitor the PO at the start time indicated by the first time information, and if the terminal device does not detect the PO corresponding to the terminal device before the first time, the terminal device switches to the sleep state.

In this way, a time window (from the start time to the first time) of monitoring the PO is defined for the terminal device, so that the terminal device can obtain more paging occasions. If the corresponding PO is not detected after the time window for monitoring the PO ends, the terminal device switches to the sleep state, to further achieve an energy-saving effect.

Optionally, the first signal further includes the second time information. For example, the second time information may be determined by the network device, and is carried in the first signal and sent to the terminal device.

For example, the first signal includes the first time information and the second time information. For another example, the first signal includes the first time information, the second time information, and the first indication information. For another example, the first signal includes the first time information, the second time information, the number of the first paging frame, and the first indication information. Optionally, the first signal may further include the identifier of the first paging group corresponding to the terminal device.

Alternatively, optionally, the second time information is preconfigured. For example, the second time information may be predefined in a protocol.

Alternatively, optionally, before receiving the first signal, the method provided in this embodiment of this application may further include: The network device sends a system message to the terminal device. Correspondingly, the terminal device receives the system message from the network device.

For example, the system message includes the second time information. In other words, the second time information may be sent by the network device to the terminal device by using the system message.

For example, the system message may be referred to as a system information block (system information block, SIB). This is not limited in this application.

In some embodiments, the second time information includes a number of a second paging frame, and the first time is the second paging frame. In other words, the paging frame number indicates the end time for monitoring the PO (or the time for entering the sleep state).

In some other embodiments, the second time information includes a quantity M of paging frames, the first time is t1+M×T2, t1 is the start time for monitoring the paging occasion or the time at which the first signal is received, and T2 is duration of one paging frame. In other words, the quantity of paging frames indicates the end time for monitoring the PO.

For example, after obtaining the quantity M of paging frames, the terminal device determines the first time based on the start time t1 (for example, the first time information) of monitoring the paging occasion, or determines, based on the time t1 at which the first signal is received, that the first time is t1+M×T2. In other words, the end time for monitoring the PO may be determined based on the start time for monitoring the paging occasion or the time at which the first signal is received.

In FIG. 8C, the first time is determined based on the start time (the first time information) of monitoring the paging occasion, and the end time (that is, the first time) of monitoring the PO is equal to M×T2 plus the start time for monitoring the paging occasion.

In FIG. 8D, the first time is determined based on the time at which the first signal is received, and the end time (that is, the first time) of monitoring the PO is equal to M×T2 plus the time at which the first signal is received. In FIG. 8D, after receiving the first signal, the terminal device is woken up after a period of wake-up time and starts to monitor the PO.

In some other embodiments, the second time information includes a quantity P of paging cycles, the first time is t1+P×T3, T3 is duration of one paging cycle, and t1 is the start time for monitoring the paging occasion or the time at which the first signal is received. In other words, the paging cycle indicates the end time for monitoring the PO.

For example, after obtaining the quantity P of paging cycles, the terminal device determines the first time based on the start time t1 (for example, the first time information) of monitoring the paging occasion, or determines, based on the time t1 at which the first signal is received, that the first time is t1+P×T3.

In some other embodiments, the second time information includes a quantity Q of paging occasions, the time for entering the sleep state is t1+Q×T4, T4 is duration of one paging occasion, and t1 is a start time for monitoring the paging occasion or a time at which the first signal is received. In other words, the paging occasion indicates the end time for monitoring the PO.

For example, after obtaining the quantity Q of paging occasions, the terminal device determines the first time based on the start time t1 (for example, the first time information) of monitoring the paging occasion, or determines, based on the time t1 at which the first signal is received, that the first time is t1+Q×T4.

In some other embodiments, the second time information includes a second period of time T5, and the first time is t1+T5.

For example, the second period of time may be duration.

For another example, the second period of time may be indicated by a quantity of SSB bursts, for example, the second time information includes a quantity S2 of SSB bursts, and the second period of time is T5=S2*duration of one SSB burst, where a mathematical symbol * indicates multiplication calculation.

In this way, the terminal device monitors the PO based on the first time information. If the terminal device determines, from a time indicated by the first time information to a time indicated by the second time information, that the network device does not page the terminal device, the terminal device may enter the sleep state, to reduce power consumption. For example, the main module of the terminal device enters the ultra-deep sleep state.

Optionally, the terminal device that enters the sleep state waits for a next wake-up signal (the first signal), and continues to monitor the PO by using the method shown in FIG. 5.

Based on the paging method shown in FIG. 5, the network device includes the first time information in the first signal and sends the first signal to the terminal device, wakes up the terminal device by using the first signal, and notifies the terminal device of the start time for monitoring the paging occasion. This can avoid a case in which a terminal device in an LP-WUS mechanism misses paging, and ensure that the terminal devices with different wake-up capabilities can all be successfully paged by the network, to improve the paging success rate.

In some embodiments, the network device sends the first signal to the terminal device, and the first signal includes the second time information; the second time information is preconfigured; or the second time information may be sent by the network device to the terminal device by using the system message.

For a specific implementation of the second indication information, refer to the corresponding descriptions in FIG. 5.

For example, the first signal includes the number of the second paging frame, the quantity M of paging frames, the quantity P of paging cycles, the quantity Q of paging occasions, or the second period of time T5.

Optionally, the first signal may further include the start time for the time window for monitoring the PO, for example, the first time information or the time at which the terminal device receives the first signal. For a specific implementation of the first time information, refer to the corresponding descriptions in FIG. 5.

With reference to FIG. 8D, when the start time for the time window for monitoring the PO is the time at which the terminal device receives the first signal, after the first signal is received, the terminal device is woken up after the period of wake-up time and starts to monitor the PO.

For example, the first signal may further include the number of the first paging frame or the time at which the first signal is received.

Optionally, the first signal may further include the first indication information and/or the identifier of the first paging group corresponding to the terminal device. For a specific implementation, refer to the corresponding descriptions in FIG. 5.

In this way, the terminal device stops monitoring the PO based on the second time information, and enters the sleep state if detecting no corresponding PO, to reduce power consumption.

In this application, unless otherwise specified, for same or similar parts in embodiments, reference may be made to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application do not constitute a limitation on the protection scope of this application.

The actions of the terminal device in the foregoing method embodiments may be performed by the terminal device instructed by the processor 201 in the communication apparatus 200 shown in FIG. 2 by invoking the application program code stored in the memory 203. The actions of the network device in the foregoing method embodiments may be performed by the network device instructed by the processor 201 in the communication apparatus 200 shown in FIG. 2 by invoking the application program code stored in the memory 203. This is not limited in embodiments of this application.

It may be understood that in the foregoing embodiments, the methods and/or steps implemented by the network device may also be implemented by a component (for example, a chip or a circuit) that can be used in the network device; and the methods and/or steps implemented by the terminal device may also be implemented by a component (for example, a chip or a circuit) that can be used in the terminal device.

The foregoing mainly describes the solutions provided in embodiments of this application from a perspective of interaction between network elements. Correspondingly, embodiments of this application further provide a communication apparatus, and the communication apparatus is configured to implement the foregoing methods. The communication apparatus may be the terminal device in the foregoing method embodiments, an apparatus including the foregoing terminal device, or a component that can be used in the terminal device. Alternatively, the communication apparatus may be the network device in the foregoing method embodiment, an apparatus including the foregoing network device, or a component that can be used in the network device. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules according to the foregoing method embodiments. For example, each functional module may be obtained through division based on each corresponding function, or two or more functions may be integrated into one processing module. The foregoing integrated module may be implemented in a form of hardware, or may be implemented in a form of a software functional module. It should be understood that module division in embodiments of this application is an example, and is only logical function division. During actual implementation, there may be another division manner.

FIG. 9 is a diagram of a structure of another communication apparatus according to an embodiment of this application. For ease of description, FIG. 9 shows only main components of the communication apparatus.

The communication apparatus 900 may include a sending module 901, a receiving module 902, and/or a processing module 903.

For example, when the communication apparatus 900 is the network device in the foregoing method embodiments, the communication apparatus 900 may include the sending module 901 and the processing module 903, and may further include the receiving module 902.

For example, when the communication apparatus 900 is the terminal device in the foregoing method embodiments, the communication apparatus 900 may include the receiving module 902 and the processing module 903, and may further include the sending module 901.

The communication apparatus 900 may be the terminal device or the network device in the foregoing method embodiments. The sending module 901 may also be referred to as a sending unit, and is configured to implement any one or more sending functions performed by the terminal device or the network device in any one of the foregoing method embodiments. The receiving module 902 may also be referred to as a receiving unit, and is configured to implement any one or more receiving functions performed by the terminal device or the network device in any one of the foregoing method embodiments.

It should be noted that the sending module 901 and the receiving module 902 may be separately disposed, or may be integrated into one module, namely, a transceiver module. Specific implementations of the receiving module and the sending module are not specifically limited in this application. The transceiver module may include a transceiver circuit, a transceiver machine, a transceiver, or a communication interface.

Optionally, the communication apparatus 900 may further include a storage module (not shown in FIG. 9). The storage module stores a program or instructions. When the processing module 903 executes the program or the instructions, the communication apparatus 900 may be enabled to perform the method according to any one of the foregoing method embodiments.

The processing module 903 may be configured to implement one or more processing functions performed by the terminal device or the network device in any one of the foregoing method embodiments. The processing module 903 may be a processor.

In this embodiment, the communication apparatus 900 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the communication apparatus 900 may be in a form of the communication apparatus 200 shown in FIG. 2.

For example, the processor 201 in the communication apparatus 200 shown in FIG. 2 may invoke the computer-executable instructions stored in the memory 203, so that the method in the foregoing method embodiments is performed.

Specifically, functions/implementation processes of the sending module 901 and the receiving module 902 may be implemented through the input device 206 and the output device 205 in the communication apparatus 200 shown in FIG. 2. Functions/implementation processes of the processing module 903 and the storage module may be implemented by the processor 201 in the communication apparatus 200 shown in FIG. 2 by invoking the computer-executable instructions stored in the memory 203.

Because the communication apparatus 900 provided in this embodiment may perform the foregoing methods, for technical effects that can be obtained by the communication apparatus 900, refer to the foregoing method embodiments. Details are not described herein again.

In a possible design solution, the communication apparatus 900 shown in FIG. 9 is applicable to the system shown in FIG. 1C, and performs a function of the network device in the paging method shown in FIG. 5 to FIG. 8D.

The processing module 903 is configured to determine first time information. The sending module 901 is configured to send a first signal to a terminal device. The first time information indicates a start time for monitoring a paging occasion. The first signal indicates the terminal device to switch from a sleep state to a wake-up state, and the first signal includes the first time information.

In some embodiments, the first time information includes a number of a first paging frame, and the start time for monitoring the paging occasion is the first paging frame. Alternatively, the first time information includes a first period of time, the start time for monitoring the paging occasion is t+T1, t is a time at which the first signal is received, and T1 is the first period of time.

In some embodiments, the first signal further includes second time information. The second time information indicates a first time, and the first time is a time at which the terminal device switches from the wake-up state to the sleep state.

In some embodiments, the second time information includes a number of a second paging frame, and the first time is the second paging frame.

Alternatively, the second time information includes a quantity M of paging frames, the first time is t1+M×T2, t1 is the start time for monitoring the paging occasion or the time at which the first signal is received, and T2 is duration of one paging frame.

Alternatively, the second time information includes a quantity P of paging cycles, the first time is t1+P×T3, and T3 is duration of one paging cycle.

Alternatively, the second time information includes a quantity Q of paging occasions, the first time is t1+Q×T4, and T4 is duration of one paging occasion.

Alternatively, the second time information includes a second period of time T5, and the first time is t1+T5.

In some embodiments, the first time information includes the number of the first paging frame, the first signal further includes first indication information, the first indication information indicates whether each of at least one paging group monitors each paging occasion included in each of paging frames starting from the first paging frame, and each of the at least one paging group includes at least one terminal device.

In some embodiments, an identifier of the at least one paging group is configured by a core network element, or an identifier of the at least one paging group is determined based on an identifier corresponding to the at least one terminal device.

In some embodiments, a paging occasion corresponding to the terminal device is determined based on an identifier of the terminal device, and a terminal device corresponding to a same paging occasion belongs to a same paging group.

In some embodiments, a paging occasion corresponding to the terminal device is determined based on an identifier of a first paging group, and the terminal device belongs to the first paging group.

It should be noted that all related content of the steps in the foregoing method embodiments may be cited in functional descriptions of corresponding functional modules. Details are not described herein again.

In addition, for technical effects of the communication apparatus 900, refer to the technical effects of the method shown in FIG. 5 to FIG. 8D. Details are not described herein again.

In another possible design solution, the communication apparatus 900 shown in FIG. 9 is applicable to the system shown in FIG. 1C, and performs a function of the terminal device in the paging method shown in FIG. 5 to FIG. 8D.

The receiving module 901 is configured to receive a first signal from a network device.

The processing module 903 is configured to switch from a sleep state to a wake-up state based on the first signal. The processing module 903 is further configured to monitor a paging occasion based on first time information. The first signal indicates the communication apparatus 900 to switch from the sleep state to the wake-up state, the first signal includes the first time information, and the first time information indicates a start time for monitoring the paging occasion

In some embodiments, the first time information includes a number of a first paging frame, and the start time for monitoring the paging occasion is the first paging frame. Alternatively, the first time information includes a first period of time, the start time for monitoring the paging occasion is t+T1, t is a time at which the first signal is received, and T1 is the first period of time.

In some embodiments, the processing module 903 is further configured to determine that a paging occasion corresponding to the communication apparatus 900 is not detected. The processing module 903 is further configured to switch from the wake-up state to the sleep state based on second time information. The second time information indicates a first time, and the first time is a time at which the communication apparatus 900 switches from the wake-up state to the sleep state.

In some embodiments, the second time information includes a number of a second paging frame, and the first time is the second paging frame. Alternatively, the second time information includes a quantity M of paging frames, the first time is $t1+M\times T2$, t1 is the start time for monitoring the paging occasion or the time at which the first signal is received, and T2 is duration of one paging frame.

Alternatively, the second time information includes a quantity P of paging cycles, the first time is $t1+P\times T3$, and T3 is duration of one paging cycle.

Alternatively, the second time information includes a quantity Q of paging occasions, the first time is $t1+Q\times T4$, and T4 is duration of one paging occasion.

Alternatively, the second time information includes a second period of time T5, and the first time is t1+T5.

In some embodiments, the first signal further includes the second time information. Alternatively, the second time information is preconfigured.

Alternatively, before receiving the first signal, the method further includes: receiving a system message. The system message includes the second time information.

In some embodiments, the first time information includes the number of the first paging frame, the first signal further includes first indication information, the first indication information indicates whether each of at least one paging group monitors each paging occasion included in each of paging frames starting from the first paging frame, and each of the at least one paging group includes at least one communication apparatus 900.

In some embodiments, monitoring the paging occasion based on the first time information includes: monitoring the paging occasion based on the first time information and the first indication information.

In some embodiments, an identifier of the at least one paging group is configured by a core network element, or an identifier of the at least one paging group is determined based on an identifier corresponding to the at least one communication apparatus 900.

In some embodiments, the paging occasion corresponding to the communication apparatus 900 is determined based on an identifier of the communication apparatus 900, and a communication apparatus 900 corresponding to a same paging occasion belongs to a same paging group.

In some embodiments, the paging occasion corresponding to the communication apparatus 900 is determined based on an identifier of a first paging group, and the communication apparatus 900 belongs to the first paging group.

It should be noted that all related content of the steps in the foregoing method embodiments may be cited in functional descriptions of corresponding functional modules. Details are not described herein again.

In addition, for technical effects of the communication apparatus 900, refer to the technical effects of the method shown in FIG. 5 to FIG. 8D. Details are not described herein again.

An embodiment of this application provides a communication system. The communication system includes a terminal device and a network device.

The terminal device is configured to perform an action of the terminal device in the foregoing method embodiments, and the network device is configured to perform an action of the network device in the foregoing method embodiments. For specific execution methods and processes, refer to the foregoing method embodiments. Details are not described herein again.

An embodiment of this application provides a chip system. The chip system includes a logic circuit and an input/output port. The logic circuit may be configured to implement a processing function in the method provided in embodiments of this application, and the input/output port may be configured for receiving and sending functions in the method provided in embodiments of this application.

For example, the input port may be configured to implement the receiving function in the method provided in embodiments of this application, and the output port may be configured to implement the sending function in the method provided in embodiments of this application.

For example, the processor in the communication apparatus 200 may be configured to perform, for example, but not limited to, baseband-related processing, and the transceiver in the communication apparatus 200 may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system-on-a-chip (system-on-a-chip). Whether components are independently disposed on different chips or are integrated and disposed on one or more chips usually depends on specific requirements of a product design. Specific implementations of the foregoing components are not limited in this embodiment.

In a possible design, the chip system further includes a memory, and the memory is configured to store program instructions and data for implementing the functions in the method provided in embodiments of this application.

The chip system may include a chip, or may include a chip and another discrete component.

An embodiment of this application provides a computer-readable storage medium. The computer-readable storage medium stores a computer program or instructions. When the computer program or the instructions are run on a computer, the method provided in embodiments of this application is performed.

An embodiment of this application provides a computer program product. The computer program product includes a computer program or instructions. When the computer program or the instructions are run on a computer, the method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any regular processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A paging method, applied to a network device, and comprising:

determining first time information, wherein the first time information indicates a start time for monitoring a paging occasion; and

sending a first signal to a terminal device, wherein the first signal indicates the terminal device to switch from a sleep state to a wake-up state, and the first signal comprises the first time information.

2. The paging method according to claim 1, wherein the first time information comprises a number of a first paging frame, and the start time for monitoring the paging occasion is the first paging frame; or

the first time information comprises a first period of time, the start time for monitoring the paging occasion is t+T1, t is a time at which the first signal is received, and T1 is the first period of time.

3. The paging method according to claim 1 or 2, wherein the first signal further comprises second time information, wherein the second time information indicates a first time, and the first time is a time at which the terminal device switches from the wake-up state to the sleep state.

4. The paging method according to claim 3, wherein the second time information comprises a number of a second paging frame, and the first time is the second paging frame;

the second time information comprises a quantity M of paging frames, the first time is $t1+M\times T2$, t1 is the start time for monitoring the paging occasion or the time at which the first signal is received, and T2 is duration of one paging frame;

the second time information comprises a quantity P of paging cycles, the first time is $t1+P\times T3$, and T3 is duration of one paging cycle;

the second time information comprises a quantity Q of paging occasions, the first time is $t1+Q\times T4$, and T4 is duration of one paging occasion; or

the second time information comprises a second period of time T5, and the first time is $t1+T5$.

5. The paging method according to any one of claims 1 to 4, wherein the first time information comprises the number of the first paging frame, the first signal further comprises first indication information, the first indication information indicates whether each of at least one paging group monitors each paging occasion comprised in each of paging frames starting from the first paging frame, and each of the at least one paging group comprises at least one terminal device.

6. The paging method according to claim 5, wherein an identifier of the at least one paging group is configured by a core network element, or an identifier of the at least one paging group is determined based on an identifier corresponding to the at least one terminal device.

7. The paging method according to any one of claims 1 to 6, wherein a paging occasion corresponding to the terminal device is determined based on an identifier of the terminal device, and a terminal device corresponding to a same paging occasion belongs to a same paging group.

8. The paging method according to any one of claims 1 to 6, wherein a paging occasion corresponding to the terminal device is determined based on an identifier of a first paging group, and the terminal device belongs to the first paging group.

9. A paging method, applied to a terminal device, and comprising:

receiving a first signal from a network device, wherein the first signal indicates the terminal device to switch from a sleep state to a wake-up state, the first signal comprises first time information, and the first time information indicates a start time for monitoring a paging occasion;

switching from the sleep state to the wake-up state based on the first signal; and

monitoring the paging occasion based on the first time information.

10. The paging method according to claim 9, wherein the first time information comprises a number of a first paging frame, and the start time for monitoring the paging occasion is the first paging frame; or

the first time information comprises a first period of time, the start time for monitoring the paging occasion is t+T1, t is a time at which the first signal is received, and T1 is the first period of time.

11. The paging method according to claim 9 or 10, wherein after monitoring the paging occasion based on the first time information, the method further comprises:

> determining that a paging occasion corresponding to the terminal device is not detected; and
> switching from the wake-up state to the sleep state based on second time information, wherein the second time information indicates a first time, and the first time is a time at which the terminal device switches from the wake-up state to the sleep state.

12. The paging method according to claim 11, wherein the second time information comprises a number of a second paging frame, and the first time is the second paging frame;

> the second time information comprises a quantity M of paging frames, the first time is t1+M×T2, t1 is the start time for monitoring the paging occasion or the time at which the first signal is received, and T2 is duration of one paging frame;
> the second time information comprises a quantity P of paging cycles, the first time is t1+P×T3, and T3 is duration of one paging cycle;
> the second time information comprises a quantity Q of paging occasions, the first time is t1+Q×T4, and T4 is duration of one paging occasion; or
> the second time information comprises a second period of time T5, and the first time is t1+T5.

13. The paging method according to claim 11 or 12, wherein the first signal further comprises the second time information; or the second time information is preconfigured; or
before receiving the first signal, the method further comprises: receiving a system message, wherein the system message comprises the second time information.

14. The paging method according to any one of claims 9 to 13, wherein the first time information comprises the number of the first paging frame, the first signal further comprises first indication information, the first indication information indicates whether each of at least one paging group monitors each paging occasion comprised in each of paging frames starting from the first paging frame, and each of the at least one paging group comprises at least one terminal device.

15. The paging method according to claim 14, wherein monitoring the paging occasion based on the first time information comprises:
monitoring the paging occasion based on the first time information and the first indication information.

16. The paging method according to claim 14 or 15, wherein an identifier of the at least one paging group is configured by a core network element, or an identifier of the at least one paging group is determined based on an identifier corresponding to the at least one terminal device.

17. The paging method according to any one of claims 9 to 16, wherein the paging occasion corresponding to the terminal device is determined based on an identifier of the terminal device, and a terminal device corresponding to a same paging occasion belongs to a same paging group.

18. The paging method according to any one of claims 9 to 16, wherein the paging occasion corresponding to the terminal device is determined based on an identifier of a first paging group, and the terminal device belongs to the first paging group.

19. A communication apparatus, wherein the communication apparatus comprises a unit or a module configured to perform the method according to any one of claims 1 to 8.

20. A communication apparatus, wherein the communication apparatus comprises a unit or a module configured to perform the method according to any one of claims 9 to 18.

21. A communication apparatus, wherein the communication apparatus comprises a processor; and the processor is configured to perform the method according to any one of claims 1 to 18.

22. A communication system, wherein the communication system comprises the communication apparatus according to claim 19 and the communication apparatus according to claim 20.

23. A computer-readable storage medium, wherein the computer-readable storage medium stores a computer program or instructions, and when the computer program or the instructions are run on a computer, the method according to any one of claims 1 to 18 is performed.

24. A computer program product, wherein the computer program product comprises a computer program or instructions, and when the computer program or the instructions are run on a computer, the method according to any one of claims 1 to 18 is performed.

Terminal device

Main module

Wake up

Wake-up
signal

Secondary
module

FIG. 1A

| T | T | ... | T |

| Offset | PF | Offset | PF | ... | PF |

| PO | PO | PO | ... | PO |

FIG. 1B

Terminal
device

Network
device

FIG. 1C

FIG. 2

Antenna 1                                    Antenna 2

| Mobile communication module 2G/3G/4G/5G [350] | | Wireless communication module BT/WLAN/GNSS/NFC/IR/FM [360] |

| Audio module [370] | | Sensor module [380] |
| Display screens 1 to N [394] | | Key [390] |
| Cameras 1 to N [393] | Processor [310] | Memory [321] |
| Indicator [392] | | SIM card interfaces 1 to N [395] |
| Motor [391] | | External memory interface [320] |

| USB interface [330] | Charging management module [340] | Power management module [341] |
| Charging input | | Battery [342] |

FIG. 3

FIG. 4

FIG. 5

FIG. 6

FIG. 7A

Terminal device

Network device

S701b: Determine a quantity of paging groups

S702b: Quantity of paging groups

S703b: Determine an identifier of a paging group to which the terminal device belongs

FIG. 7B

Start time

Wake-up time

First signal

...

☐ PO    ■ PO corresponding to a terminal device

FIG. 8A

Start time    First time

Wake-up time    Monitor POs

First signal

...    ...

☐ PO    ■ PO corresponding to a terminal device

FIG. 8B

First
time

Start
time

Wake-up time

Monitor POs

Enter a sleep state

First
signal

...

☐ PO

■ PO corresponding to
a terminal device

FIG. 8C

Time window

First time

Wake-up time

First
signal

...

...

☐ PO

■ PO corresponding to
a terminal device

FIG. 8D

Communication apparatus 900

901

Processing
module

903

Sending module

902

Receiving module

FIG. 9

## INTERNATIONAL SEARCH REPORT

| International application No. |
|---|
| **PCT/CN2024/075766** |

| A. | CLASSIFICATION OF SUBJECT MATTER |
|---|---|

H04W 68/02(2009.01)i

According to International Patent Classification (IPC) or to both national classification and IPC

| B. | FIELDS SEARCHED |
|---|---|

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

CNTXT, WPABSC, WPABS, DWPI, ENTXTC, ENTXT: 寻呼, 无线资源控制, radio resource control, RRC, 空闲态, RRC_IDLE, 非激活态, RRC_INACTIVE, 寻呼消息,paging message, 寻呼时机, paging occasion, PO, 低功耗唤醒信号, lower power wake up signal, LP-WUS, 寻呼帧, frame

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2019086674 A1 (SONY MOBILE COMMUNICATIONS INC.) 09 May 2019 (2019-05-09)<br>description, pages 7-27, claims 1-13, and figures 9-15 | 1-24 |
| X | CN 109923914 A (LG ELECTRONICS, INC.) 21 June 2019 (2019-06-21)<br>claims 1-15, and description, pages 4-26 | 1-24 |
| A | WO 2022012388 A1 (HUAWEI TECHNOLOGIES CO., LTD.) 20 January 2022 (2022-01-20)<br>entire document | 1-24 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 April 2024** | **23 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075766**

| Patent document cited in search report | | | Publication date (day/month/year) | Patent family member(s) | | | Publication date (day/month/year) |
|---|---|---|---|---|---|---|---|
| WO | 2019086674 | A1 | 09 May 2019 | EP | 3704901 | A1 | 09 September 2020 |
| | | | | JP | 2021502029 | A | 21 January 2021 |
| | | | | US | 2020367194 | A1 | 19 November 2020 |
| CN | 109923914 | A | 21 June 2019 | US | 2021153163 | A1 | 20 May 2021 |
| | | | | EP | 3968709 | A1 | 16 March 2022 |
| | | | | JP | 2020501431 | A | 16 January 2020 |
| | | | | EP | 3509368 | A1 | 10 July 2019 |
| | | | | US | 2019239189 | A1 | 01 August 2019 |
| | | | | US | 2024049179 | A1 | 08 February 2024 |
| | | | | WO | 2018174635 | A1 | 27 September 2018 |
| | | | | KR | 20180121350 | A | 07 November 2018 |
| | | | | IN | 201917025722 | A | 27 September 2019 |
| | | | | CN | 113873621 | A | 31 December 2021 |
| | | | | CN | 113891437 | A | 04 January 2022 |
| WO | 2022012388 | A1 | 20 January 2022 | CN | 113938995 | A | 14 January 2022 |

Form PCT/ISA/210 (patent family annex) (July 2022)

**REFERENCES CITED IN THE DESCRIPTION**

**Patent documents cited in the description**

- CN 202310153258